# EUROPEAN PATENT APPLICATION

(11) **EP 1 761 060 A2**
(43) Date of publication of application: **07.03.2007**
(21) Application number: 06119860.2
(22) Date of filing: 31.08.2006
(51) Int. Cl.: H04N 7/24

(54) **Transmission system, receiving terminal, and method for controlling data broadcasting contents**

(30) Priority: 06.09.2005 KR 20050082535
(71) Applicant: ELECTRONICS AND TELECOMMUNICATIONS RESEARCH INSTITUTE, Daejeon 305-350 (KR)
(72) Inventor: KIM, Woo-Suk, Daejon 302-170 (KR); BAE, Byung-Jun, Daejon 302-777 (KR); YUN, Joung-Il, Daejon 305-308 (KR); AHN, Chung-Hyun, Daejon 305-340 (KR); LEE, Soo-In, Daejon 302-772 (KR)
(74) Representative: Betten & Resch

(57) **Abstract**

Provided are a transmission system, a receiving terminal, and a method for controlling XML-based data broadcasting contents through data channels in a T-DMB. In the transmission system, a data broadcasting transfer server transfers the data broadcasting contents, and a control command transfer server generates control command data according to a control action of a service provider with respect to the data broadcasting contents. A multiplexer multiplexes the data broadcasting contents and the control command data and transmits the multiplexed data broadcasting contents and control command data through data channels.

## Description

### Field of the Invention

The present invention relates to a technology for controlling data broadcasting contents; and, more particularly, to a transmission system, a receiving terminal, and a method for controlling extensible Markup Language (XML)-based data broadcasting contents through data channels in a terrestrial Digital Multimedia Broadcasting (DMB).

### Description of Related Art

Terrestrial DMB (T-DMB) provides multimedia services including CD-quality audio and high-quality video in a mobile environment.

T-DMB is based on Eureka-147 DAB standard and employs Moving Picture Experts Group (MPEG)-4 Advanced Video Coding (AVC) and MPEG-4 Bit Sliced Arithmetic Coding (BSAC) as video and audio coding standards. In addition, T-DMB employs an MPEG-2 system and an MPEG-4 system for synchronization and multiplexing. Moreover, T-DMB has an improved reception performance in the mobile environment by applying Coded Orthogonal Frequency Division Multiplexing (COFDM), Reed Solomon (RS) code, and Convolutional Interleaver.

T-DMB can transmit the general data such as HyperText Markup Language (HTML) through stream mode or packet mode data channels. Based on this, data broadcasting standards such as Broadcasting Web Service (BWS), Slideshow, and Electronic Program Guide (EPG) are defined in the existing T-DMB.

However, the data broadcasting contents have static characteristics and cannot be modified after they are transmitted to user terminals. Therefore, if wanting the contents to be modified, the entire contents have to be retransmitted.

### Summary of the Invention

It is, therefore, an object of the present invention to provide a transmission system in which a service operator can control data broadcasting contents, which has been already received by a receiving terminal, by transmitting control commands for the data broadcasting contents.

It is another object of the present invention to provide a receiving terminal that can process the data broadcasting contents and the control commands received from the transmission system.

It is a further object of the present invention to provide a method for controlling data broadcasting contents, in which the data broadcasting contents already transmitted to the user terminal can be controlled by transmitting the control commands.

In accordance with an aspect of the present invention, there is provided a transmission system for controlling data broadcasting contents, the system including: a data broadcasting transfer server for transferring the data broadcasting contents; a control command transfer server for generating control command data according to a control action of a service provider with respect to the data broadcasting contents; and a multiplexer for multiplexing the data broadcasting contents and the control command data and transmitting the multiplexed data broadcasting contents and control command data through data channels.

In accordance with another aspect of the present invention, there is provided a receiving terminal for controlling data broadcasting contents, the receiving terminal including: a receiver for demultiplexing data broadcasting signal into data broadcasting contents and control command data; a data broadcasting browser for playing the received data broadcasting contents; and a data broadcasting controller for controlling the data broadcasting browser according to the received control command data, so that the data broadcasting contents are controlled.

In accordance with a further aspect of the present invention, there is provided a method for controlling data broadcasting contents, the method including the steps of: a) at a data broadcasting service operator, transmitting data broadcasting contents and control command data with respect to the data broadcasting contents through data channels to a receiving terminal; and b) at the receiving terminal, controlling the received data broadcasting contents according to the received control command data.

### Brief Description of the Drawings

The above and other objects and features of the present invention will become apparent from the following description of the preferred embodiments given in conjunction with the accompanying drawings, in which:
Fig. 1 is a block diagram of an entire system configuration in accordance with a preferred embodiment of the present invention;
Fig. 2 is a block diagram of a control command data structure;
Fig. 3 is a block diagram of a T-DMB receiving terminal of Fig. 1;
Fig. 4 explains a concept of controlling data broadcasting contents in real time in accordance with an embodiment of the present invention; and
Fig. 5 is a flowchart illustrating a method for controlling DMB broadcasting contents in accordance with an embodiment of the present invention.

### Detailed Description of the Invention

Other objects and aspects of the invention will become apparent from the following description of the embodiments with reference to the accompanying drawings, which is set forth hereinafter.

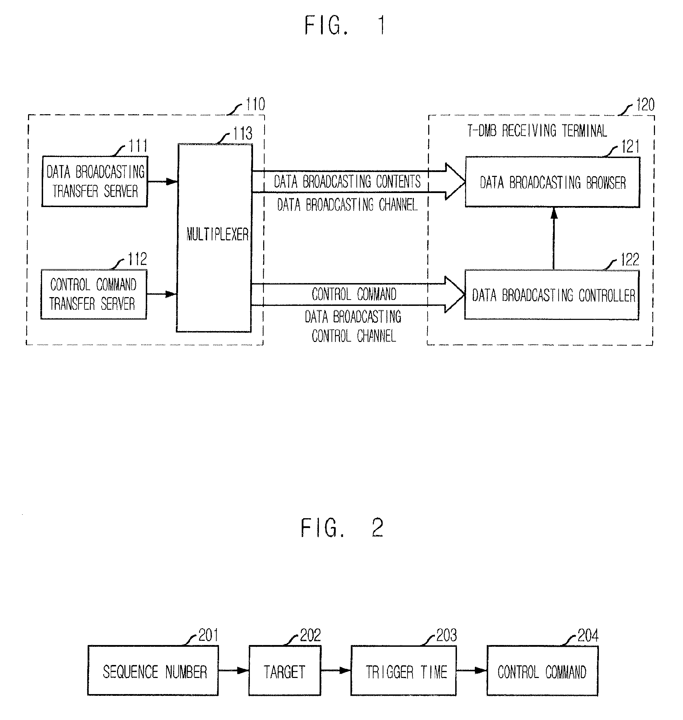

Fig. 1 is a block diagram of an entire system configuration in accordance with a preferred embodiment of the present invention.

The system of the present invention includes a T-DMB transmission system 110 and a T-DMB receiving terminal 120. The T-DMB transmission system 110 transmits data broadcasting and a control command through T-DMB, and the T-DMB receiving terminal 120 receives the data broadcasting and the control command and provides them to a user terminal.

The T-DMB transmission system 110 includes a data broadcasting transfer server 111, a control command transfer server 112, and a multiplexer 113. The data broadcasting transfer server 111 transmits various types of data broadcasting contents defined in the DMB standard. Generally, the data broadcasting contents have an XML or HTML format. The control command transfer server 112 generates control commands for allowing the user terminal to control the data broadcasting contents. The multiplexer 113 receives data from the data broadcasting transfer server 111 and the control command transfer server 112, ensemble-multiplexes the received data, and transmits the ensemble-multiplexed data through the DMB broadcasting network. The transmitted control command corresponds to API of Document Object Model (DOM) interference for controlling the individual contents of the data broadcasting transmitted from the data broadcasting transfer server 111. At this point, the data broadcasting contents and the control commands are independently transferred through the data channels of the T-DMB. These channels are transmitted through a Main Service Channel (MSC) data group of the packet mode.

The T-DMB receiving terminal 120 receives the data broadcasting contents and the control commands transmitted from the transmission system 110 through the data channels. In the T-DMB receiving terminal 120, a data broadcasting browser 121 plays the data broadcasting contents, and a data broadcasting controller 122 controls the data broadcasting browser 121 according to the control commands, thereby controlling the data broadcasting contents. Therefore, the DMB service operator can remotely control the data broadcasting contents transmitted from the receiving terminal 120.

Fig. 2 is a block diagram of the control command data structure in accordance with an embodiment of the present invention. The control command data structure includes at least four fields as illustrated in Fig. 2 and, if necessary, may further include additional information.

A sequence number field 201 includes information on unique number added to each control command. Therefore, the control commands can be distinguished from one another.

A target field 202 includes identification information of the contents to be controlled by the control commands. A trigger time field 203 includes time information on when to execute the control commands.

The control command field 204 corresponds to the API of the DOM interface for controlling the individual contents.

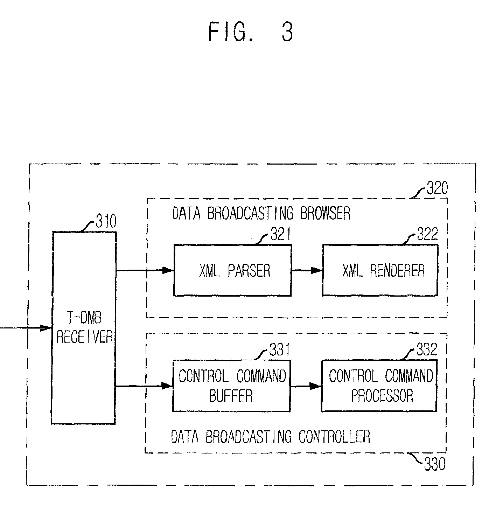

Fig. 3 is a block diagram of the T-DMB receiving terminal of Fig. 1 in accordance with an embodiment of the present invention. The T-DMB receiving terminal can remotely control the contents according to the received control command data.

The T-DMB receiving terminal includes a T-DMB receiver 310, a data broadcasting browser 320, and a data broadcasting controller 330. The T-DMB receiver 310 demultiplexes DMB, and the data broadcasting browser 320 includes an XML parser 321 and an XML renderer 322. The data broadcasting controller 330 includes a control command buffer 331 and a control command processor 332.

After demultiplexing the DMB, the T-DMB receiver 310 transmits the data broadcasting contents to the data broadcasting browser 320 and the control commands to the data broadcasting controller 330.

The data broadcasting browser 320 parses the data broadcasting contents through the XML parser 321 and displays the parsed data broadcasting contents through the XML renderer 322.

The data broadcasting controller 330 stores the received control commands in the control command buffer 331. The control command processor 332 controls the data broadcasting contents by controlling the XML parser 321 and the XML renderer 322 according to the control commands contained in the control command field 204, based on the control command execution time contained in the trigger time field 203 of the control command data stored in the control command buffer 331.

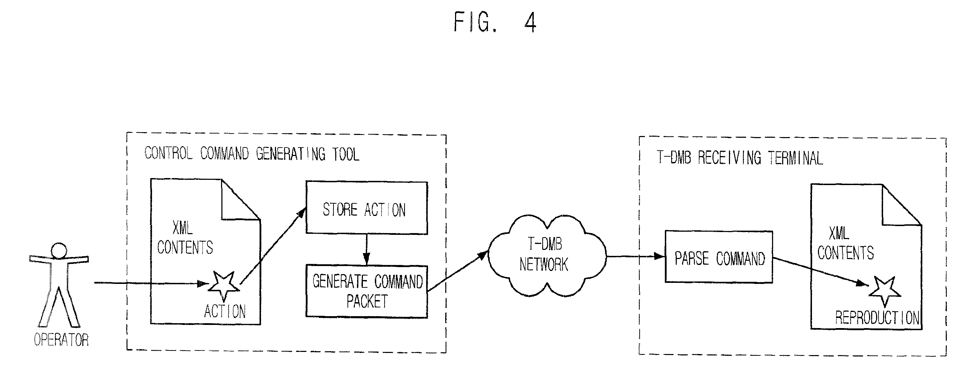

Fig. 4 explains the concept of controlling the data broadcasting contents in real time in accordance with an embodiment of the present invention.

When the service operator inputs an action for controlling the data broadcasting contents, a control command generating tool records action information, e.g., modification of the content structure and addition of new information. Then, the control command generating tool generates packets of a control command format and transmits the generated packets through the DMB network. The control command generating tool may be provided in the control command transfer server, or may be provided in the outside while some functions such as storage and packet generation are interfaced with the control command transfer server.

Meanwhile, the T-DMB receiving terminal parses the control command data received through the DMB network and generates the control commands according to the trigger time. Through these procedures, the action generated from the tool is reproduced. Consequently, the DMB data broadcasting contents can be controlled in real time.

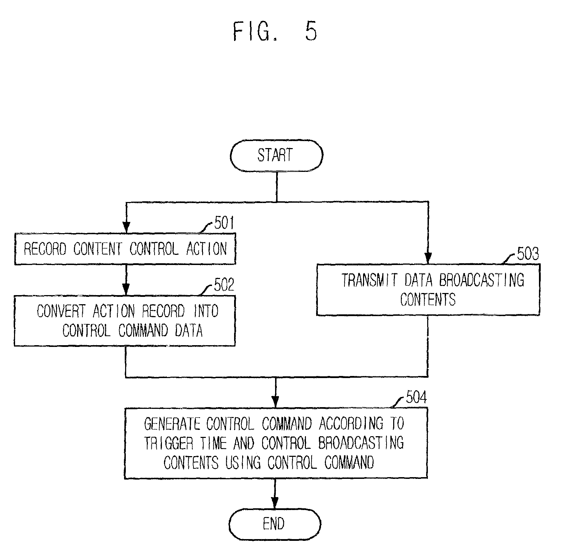

Fig. 5 is a flowchart illustrating a method for controlling the DMB broadcasting contents in accordance with an embodiment of the present invention.

Referring to Fig. 5, the transmitter side records the data broadcasting content control action inputted from the service operator in step S501. In step S502, the stored action record is generated as the packet of the control command format, that is, the control command data, and then is transferred through the DMB network.

The record and storage of the control action and the conversion of the control action into the control command data are achieved in the control command transfer server. As illustrated in Fig. 2, the control command data includes the sequence number field, the target field, the trigger time field, and the control command field. The sequence number field includes number information so as to distinguish the control commands from one another, and the target field includes the identification information of the contents to be controlled. The trigger time field includes time information on when to execute the control commands. The control command field includes the control information corresponding to the API of the DOM interface.

In step S503, the transmitter side transmits the data broadcasting contents through the data broadcasting channels.

In step S504, the receiver side, that is, the receiving terminal, parses the control command data received from the transmitter side, generates the control commands according to the trigger time, and controls the data broadcasting contents received from the transmitter side. That is, the action generated at the transmitter side is reproduced.

As described above, the service provider can control the data broadcasting contents transmitted to the user in real time. Therefore, more dynamic services can be provided in the live broadcasting, and various service models can be established in cooperation with the bi-directional broadcasting. Examples of the various service models may include real-time remote lecture, and remote collaboration, and so on.

Furthermore, when some of the data broadcasting contents are modified, only the control signals for the modification are transmitted, instead of transmitting the entire contents. Therefore, the T-DMB network having small bandwidth can be used more effectively.

The methods in accordance with the embodiments of the present invention can be realized as programs and stored in a computer-readable recording medium that can execute the programs. Examples of the computer-readable recording medium include CD-ROM, RAM, ROM, floppy disks, hard disks, magnetooptical disks and the like.

The present application contains subject matter related to Korean patent application No. 2005-0082535, filed in the Korean Intellectual Property Office on September 6, 2005, the entire contents of which is incorporated herein by reference.

While the present invention has been described with respect to certain preferred embodiments, it will be apparent to those skilled in the art that various changes and modifications may be made without departing from the scope of the invention as defined in the following claims.

## Claims

1. A transmission system for controlling data broadcasting contents, comprising:
a data broadcasting transfer server for transferring the data broadcasting contents;
a control command transfer server for generating control command data according to a control action of a service provider with respect to the data broadcasting contents; and
a multiplexer for multiplexing the data broadcasting contents and the control command data and transmitting the multiplexed data broadcasting contents and control command data through data channels.

2. The transmission system as recited in claim 1, wherein the control command data includes:
a first field containing control command information for controlling each of the contents;
a second field containing information for distinguishing the respective control commands from one another;
a third field containing identification information of the contents to be controlled by the control command; and
a fourth field containing time information on when to execute the control command.

3. The transmission system as recited in claim 1 or 2, wherein the control command corresponds to an API of extensible markup language (XML) Document Object Model (DOM).

4. A receiving terminal for controlling data broadcasting contents, comprising:
a receiver for demultiplexing data broadcasting signal into data broadcasting contents and control command data;
a data broadcasting browser for playing the received data broadcasting contents; and
a data broadcasting controller for controlling the data broadcasting browser according to the received control command data, so that the data broadcasting contents are controlled.

5. The receiving terminal as recited in claim 4, wherein the control command data includes:
a first field containing control command information for controlling each of the contents;
a second field containing information for distinguishing the respective control commands from one another;
a third field containing identification information of the contents to be controlled by the control command; and
a fourth field containing time information on when to execute the control command.

6. The receiving terminal as recited in claim 4 or 5, wherein the data broadcasting controller generates the control commands according to the time information and controls the data broadcasting browser using the generated control commands.

7. A method for controlling data broadcasting contents, comprising the steps of:
a) at a data broadcasting service operator, transmitting data broadcasting contents and control command data with respect to the data broadcasting contents through data channels to a receiving terminal; and
b) at the receiving terminal, controlling the received data broadcasting contents according to the received control command data.

8. The method as recited in claim 7, wherein the control command data includes:
a first field containing control command information for controlling each of the contents;
a second field containing information for distinguishing the respective control commands from one another;
a third field containing identification information of the contents to be controlled by the control command; and
a fourth field containing time information on when to execute the control command.

9. The method as recited in claim 7 or 8, wherein the step b) includes the step of generating the control commands according to the time information and controlling the data broadcasting contents using the generated control commands.
